# EUROPEAN PATENT APPLICATION

(11) **EP 2 143 643 A1**
(43) Date of publication of application: **13.01.2010**
(21) Application number: 08160297.1
(22) Date of filing: 11.07.2008
(51) Int. Cl.: B65B 9/22, B65B 57/04, B65B 57/18

(54) **Packaging machine for producing sealed packages of a food product**

(71) Applicant: Tetra Laval Holdings & Finance SA, 1009 Pully (CH)
(72) Inventor: Ferrari, Claudio, 41042 Fiorano Modenese (IT); Costa, Stefano, 26041 Casalmaggiore (IT); Zambonelli, Alberto, 41100 Modena (IT); Sighinolfi, Fabrizio, 41015 Nonantola (IT)
(74) Representative: Jorio, Paolo

(57) **Abstract**

A packaging machine (1, 1', 1 ") for producing sealed packages (2) of a food product from a web (3) of packaging material fed in the form of a tube (10) having a first axis (A), the machine having a number of forming rollers (20, 21; 21', 23') defining a compulsory passage for the tube (10) and located, in use, outside the tube (10); a frame (18) to which first forming rollers (20, 21') are hinged; and a first pressure roller (22, 24') which rotates about a second axis (C; C') crosswise to the first axis (A), is located, in use, inside the tube (10), and presses the packaging material against a second forming roller (21, 23') in a direction (R) crosswise to the first and second axis (A; C, C'), to form a longitudinal seal (14) of the tube (10); the machine (1, 1', 1'') having sensor means (30, 31) connected rigidly in the aforementioned direction (R) to the second forming roller (21, 23') or the first pressure roller (22, 24'), and which generate a signal associated with the pressure exerted on the packaging material when forming the seal (14).

## Description

The present invention relates to a packaging machine for producing sealed packages of a food product from a web of packaging material fed in the form of a tube.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH) film, which is superimposed on a layer of heat-seal plastic material, and is in turn covered with another layer of heat-seal plastic material forming the inner face of the package eventually contacting the food product.

As is known, packages of this sort are produced on fully automatic packaging machines, on which the tube is formed continuously from the web-fed packaging material. More specifically, the web of packaging material is unwound off a reel and fed through a station for applying a sealing strip of heat-seal plastic material, and through an aseptic chamber on the packaging machine, where it is sterilized, e.g. by applying a sterilizing agent such as hydrogen peroxide, which is subsequently evaporated by heating, and/or by subjecting the packaging material to radiation of appropriate wavelength and intensity.

The web of packaging material is then maintained in a sterile-air environment, and is fed through a number of forming assemblies which interact with the packaging material to fold it gradually from strip form into a tube shape.

More specifically, a first portion of the sealing strip is applied to a first longitudinal edge of the packaging material, on the face of the material eventually forming the inside of the packages; and a second portion of the sealing strip projects from the first longitudinal edge.

The forming assemblies are arranged in succession, and comprise respective roller folding members defining a number of compulsory packaging material passages varying gradually in section from a C shape to a substantially circular shape.

On interacting with the folding members, the second longitudinal edge is laid on the outside of the first longitudinal edge with respect to the axis of the tube being formed. More specifically, the sealing strip is located entirely inside the tube, and the face of the second longitudinal edge facing the axis of the tube is superimposed partly on the second portion of the sealing strip, and partly on the face of the first longitudinal edge located on the opposite side to the first portion of the sealing strip.

Packaging machines of the above type are known in which the first and second longitudinal edge are heat sealed to form a longitudinal seal along the tube, which is then filled with the sterilized or pasteurized food product, and is sealed and cut along equally spaced cross sections to form pillow packs, which are then folded mechanically to form respective parallelepiped-shaped packages.

More specifically, the heat-seal operation comprises a first heating step to heat the second longitudinal edge without the sealing strip; and a second pressure step to compress the sealing strip and the longitudinal edges.

The first heating step melts the polyethylene layer of the second longitudinal edge, which transmits heat by conduction to the first longitudinal edge and the sealing strip, so as to melt the polyethylene layer of the first longitudinal edge and the heat-seal material of the sealing strip.

At the second pressure step, the tube is fed between a number of first forming rollers outside the tube, and at least a second pressure roller inside the tube.

More specifically, the first forming rollers define a compulsory circular passage for the tube of packaging material, and have respective axes in a plane perpendicular to the path of the tube.

The second pressure roller has an axis parallel to the axis of a corresponding first forming roller, and presses the sealing strip and the longitudinal edges of the packaging material against the corresponding first forming roller, so that the heat-seal material of the sealing strip and the polyethylene layers of the longitudinal edges blend completely and form the molecular bonds defining the longitudinal seal of the tube.

To produce a high-quality longitudinal seal, it is essential that the pressure exerted on the packaging material be maintained above a set threshold value.

A need is therefore felt within the industry to determine continuously, accurately, and repeatably the value of the pressure exerted by the first and second roller on the packaging material.

A need is also felt within the industry to adjust the above pressure, without stopping the packaging machine, to ensure correct sealing in the event of variations in the thickness of the packaging material, or in the event the pressure on the packaging material falls below the set threshold value.

It is an object of the present invention to provide a packaging machine, for producing sealed packages of a food product from a web of packaging material fed in the form of a tube, designed to achieve at least one of the above aims in a straightforward, low-cost manner.

According to the present invention, there is provided a packaging machine, for producing sealed packages of a food product from a web of packaging material fed in the form of a tube, as claimed in Claim 1.

The present invention also relates to a packaging machine, for producing sealed packages of a food product from a web of packaging material fed in the form of a tube, as claimed in Claim 18.

A preferred, non-limiting embodiment of the present invention will be described by way of example with reference to the accompanying drawings, in which:
Figure 1 shows a schematic view in perspective of a packaging machine, for producing sealed packages of a food product from a web of packaging material fed in the form of a tube, in accordance with a first embodiment of the present invention;
Figure 2 shows a larger-scale view of a number of operating stations of the Figure 1 machine;
Figure 3 shows a larger-scale section of a sealing station of the Figure 1 and 2 packaging machine, for producing a longitudinal seal of a tube of packaging material;
Figure 4 shows a view in perspective of the sealing station of a packaging machine in accordance with a different embodiment of the invention;
Figure 5 shows a larger-scale section of the sealing station of the Figure 4 packaging machine;
Figure 6 shows a larger-scale section of part of the sealing station of a packaging machine in accordance with a further embodiment of the invention;
Figure 7 shows a larger-scale section of part of the longitudinal sealing station of the Figure 1 to 6 packaging machines.

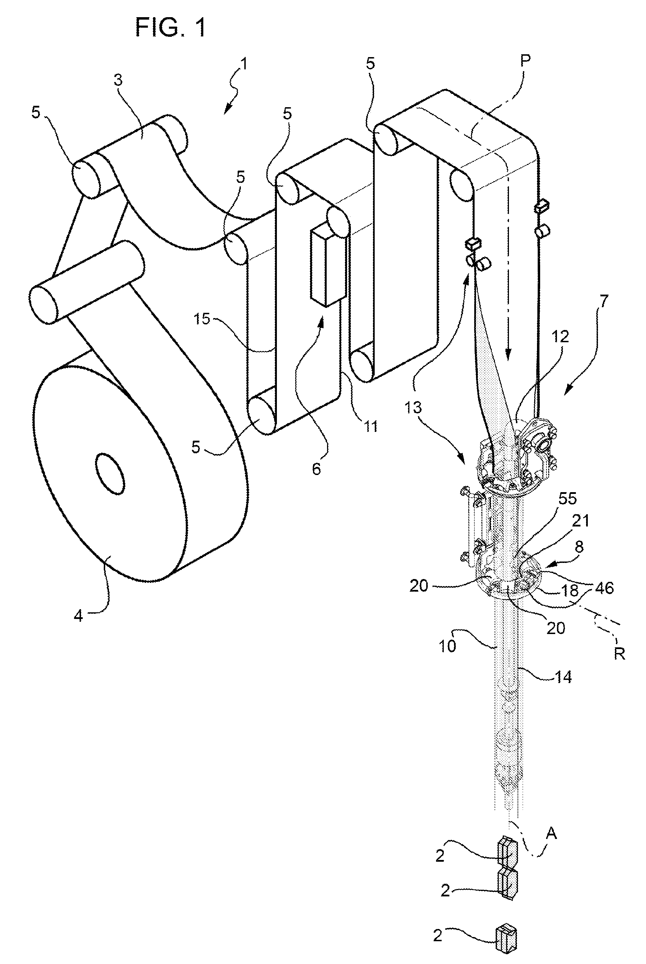

Number 1 in Figure 1 indicates as a whole a packaging machine for continuously producing sealed packages 2 of a food product from a web 3 of packaging material, which is unwound off a reel 4 and fed along a forming path P.

Machine 1 preferably produces sealed packages 2 of a pourable food product, such as pasteurized or UHT milk, fruit juice, wine, etc.

Machine 1 may also produce sealed packages 2 of a food product that is pourable when producing packages 2, and sets after packages 2 are sealed. One example of such a food product is a portion of cheese, that is melted when producing packages 2, and sets after packages 2 are sealed.

The packaging material has a multilayer structure substantially comprising a base layer for stiffness and strength, which may be defined by a layer of fibrous material, e.g. paper, or mineral-filled polypropylene material; and a number of layers of heat-seal plastic material, e.g. polyethylene film, covering both sides of the base layer.

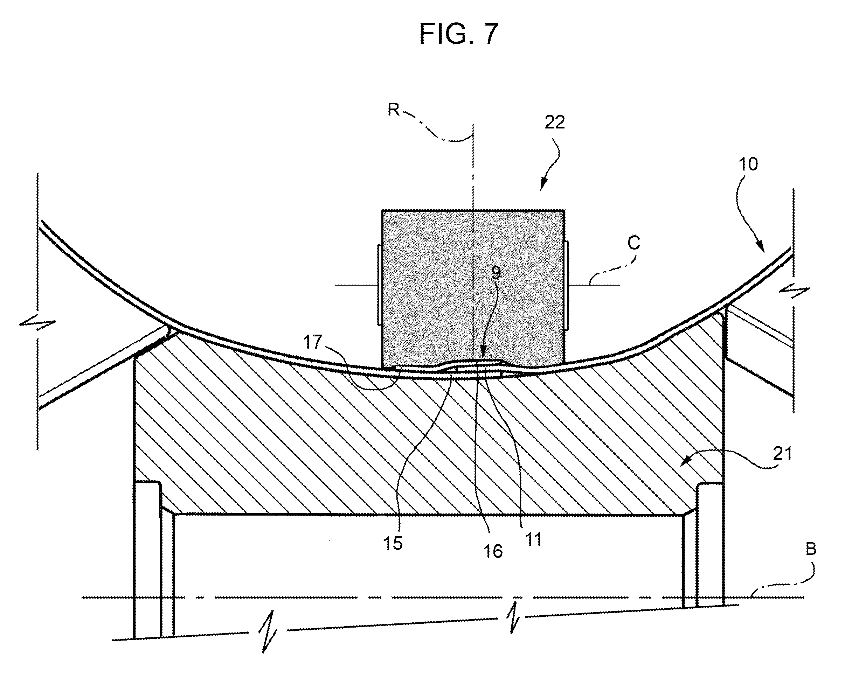

More specifically, web 3 is fed along path P by guide members 5, e.g. rollers or similar, and successively through a number of work stations, of which Figure 1 shows schematically : a station 6 for applying a sealing strip 9 (shown in Figure 7) to web 3; a forming station 7 for forming a tube 10 of packaging material; and a station 8 for heat sealing a longitudinal seal 14 along tube 10. More specifically, tube 10 has an axis A, and seal 14 is parallel to and at a distance from axis A.

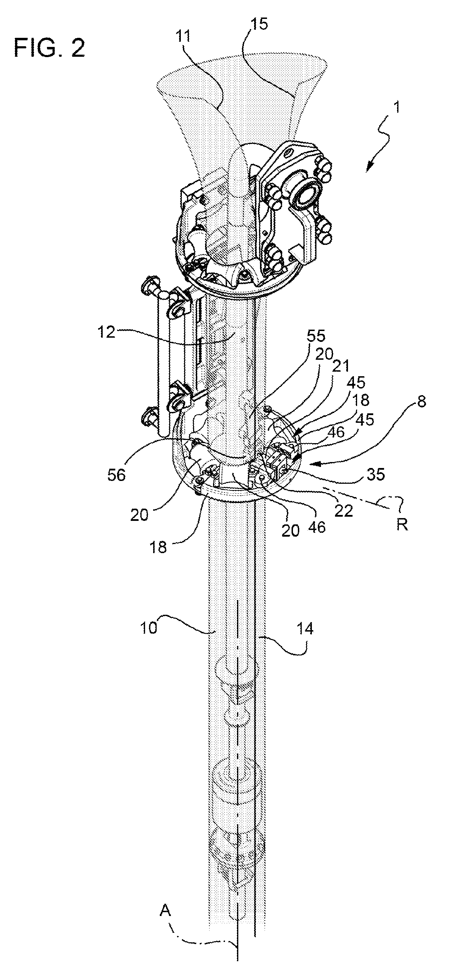

Machine 1 also comprises a fill device 12 for pouring the sterilized or sterile-processed food product continuously into tube 10 of packaging material; and a jaw-type forming assembly (not shown) for gripping, sealing, and cutting tube 10 along equally spaced cross sections to form a succession of packages 2. More specifically, device 12 comprises an end portion (shown in Figures 1 and 2) defining a food product inlet opening; and a main body housed inside tube 10.

More specifically, at station 6, a longitudinal edge 11, parallel to path P, of web 3 is first heated, e.g. by air or induction, to melt the plastic layer. Web 3 has a longitudinal edge 15 opposite edge 11 and also parallel to path P.

Next, a first portion 16 (Figure 7) of strip 9 is first applied to the face of edge 11 eventually facing inwards of packages 2, while a further portion 17 of strip 9 projects from edge 11.

Finally, strip 9 is pressed onto longitudinal edge 11, e.g. by means of rollers not shown.

More specifically, strip 9 is made of heat-seal plastic material.

Strip 9 prevents edge 11 from absorbing the food product once tube 10 and seal 14 of the tube are formed, and also provides for improving the gas-barrier performance and physical strength of seal 14.

Station 7 comprises a number of forming assemblies 13 arranged successively along path P, and which interact gradually with web 3 to fold it into the form of tube 10.

More specifically, forming assemblies 13 comprise respective numbers of rollers defining respective compulsory packaging material passages, the respective sections of which vary gradually from a C shape to a substantially circular shape.

More specifically, the axes of the rollers in each forming assembly 13 lie in a relative plane perpendicular to path P.

Forming assemblies 13 gradually form tube 10, so that edge 15 is located outwards of edge 11 with respect to axis A of tube 10.

Station 8 comprises heating means (not shown) for heating edge 15 and locally melting the polyethylene layer of edge 15. Heat is transmitted by conduction from edge 15 to edge 11 and strip 9, so as to locally melt the polyethylene layer of edge 11 and the heat-seal material of the sealing strip.

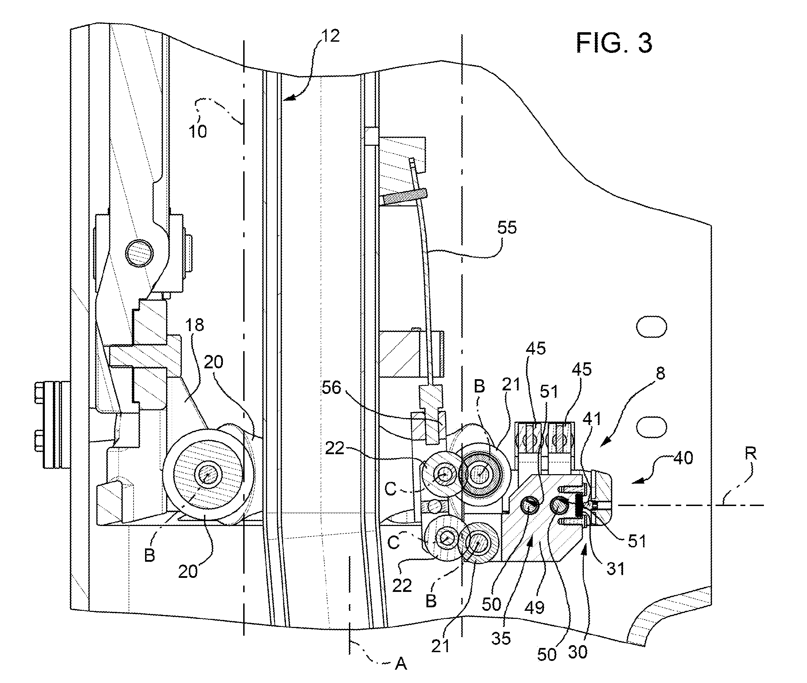

Station 8 also comprises (Figures 2 and 3) :
- a number of forming rollers 20, 21 having respective axes B, located outside tube 10, and defining a compulsory circular passage for tube 10;
- a frame 18 supporting rollers 20; and
- two pressure rollers 22 located inside tube 10, and which press the superimposed strip 9 and edges 11, 15 against corresponding rollers 21, so the polyethylene layer of edges 11, 15 and the heat-seal material of strip 9 blend to form the molecular bonds defining longitudinal seal 14 of tube 10. More specifically, the pressure exerted by rollers 21, 22 on strip 9 and edges 11, 15 is mainly directed in a direction R radial with respect to axes A and B.

More specifically, frame 18 comprises an annular main portion surrounding rollers 20 on the opposite side to axis A; and a number of angularly equally spaced appendixes projecting from the main portion of frame 18 towards axis A.

Each roller 20 extends between a respective pair of consecutive appendixes of frame 18, and is hinged at its opposite axial ends to the respective pair of appendixes about respective axis B.

Axes B of rollers 20 lie in a plane perpendicular to path P.

Axes B of rollers 21 are superimposed vertically. More specifically, axis B of a first roller 21 is coplanar with axes B of rollers 20, and axis B of a second roller 21 is located below axis B of rollers 20.

Each roller 21 is smaller in length and diameter than rollers 20.

In the example shown, each roller 20, 21 is of minimum diameter in a respective central plane perpendicular to respective axis B, and decreases in diameter from its axial ends towards said central plane.

More specifically, each roller 21 is smaller in length and diameter than the corresponding roller 20.

As shown in Figures 1, 2 and 7, rollers 22 rotate idly about respective axes C parallel to axes B of corresponding rollers 21.

Rollers 21, 22 (Figure 7) keep portion 17 of strip 9 and edge 11 and portion 16 of strip 9 pressed on the face of edge 15 inside tube 10.

Accordingly, rollers 22 are pushed against the packaging material and corresponding rollers 21 by elastic means. More specifically, the elastic means comprise a leaf spring 55 (Figures 2, 4, 5) having a first end fixed to device 12, and a second end opposite the first end and fixed to a supporting device 56, to which pressure rollers 22 are hinged about relative axes C.

More specifically, axes C of rollers 22 are superimposed and define a first plane positioned vertically in use; similarly, axes B of rollers 21 are superimposed and define a second plane; and the first and second plane are parallel to each other and to axis A.

Machine 1 advantageously comprises sensor means 30 connected rigidly to rollers 21 in direction R, and which generate a signal associated with the pressure exerted on the packaging material when forming seal 14.

In other words, rollers 21 rotate with respect to sensor means 30 about respective axes B, but are integral with respect to sensor means 30 in direction R.

More specifically, sensor means 30 comprise a load cell 31 which converts the pressure exerted by rollers 21, 22 on the packaging material in direction R into a voltage signal. In the example shown, load cell 31 is temperature-compensated and therefore capable of working at temperatures of up to 130°C.

Machine 1 (Figure 3) also comprises a support 35 for supporting rollers 21 and load cell 31; and lock means 40 for preventing support 35 from moving in direction R.

More specifically, support 35 has a seat engaged by load cell 31, and supports rollers 21 in rotary manner about axes B.

The seat engaged by load cell 31 is defined by an end face of support 35 located on the opposite side to axis A and in a plane parallel to axes A, B and C.

Rollers 21 are hinged to support 35 about respective axes B and interposed between load cell 31 and a second end of support 35 radially opposite said first end face with respect to axis A.

Lock means 40 cooperate with load cell 31 and are located on the opposite side of support 35 to axis A.

In the example shown, lock means 40 comprise a threaded pin 41 cooperating with load cell 31 and extending in direction R; and a support supporting pin 41 and fixed to frame 18.

Machine 1 also comprises two levers 45 for securing support 35 to frame 18.

Levers 45 exert on support 35 respective forces parallel to axis A, and which are directed upwards, with reference to Figure 3, and balance the weight of support 35 and rollers 21.

Levers 45 exert no force on, and so in no way secure, support 35 in direction R, so pin 41 balances the reaction force generated by the packaging material on roller 21.

In other words, support 35 is "suspended" from levers 45.

More specifically, levers 45 have respective pins 50 engaging, with minimum friction, respective bushes 51 defined by opposite walls 49 of support 35.

More specifically, pins 50 cooperate with the edges of bushes 51, but are not fixed to bushes 51.

Walls 49 lie in respective planes parallel to each other and to axis A, and perpendicular to axes B and C.

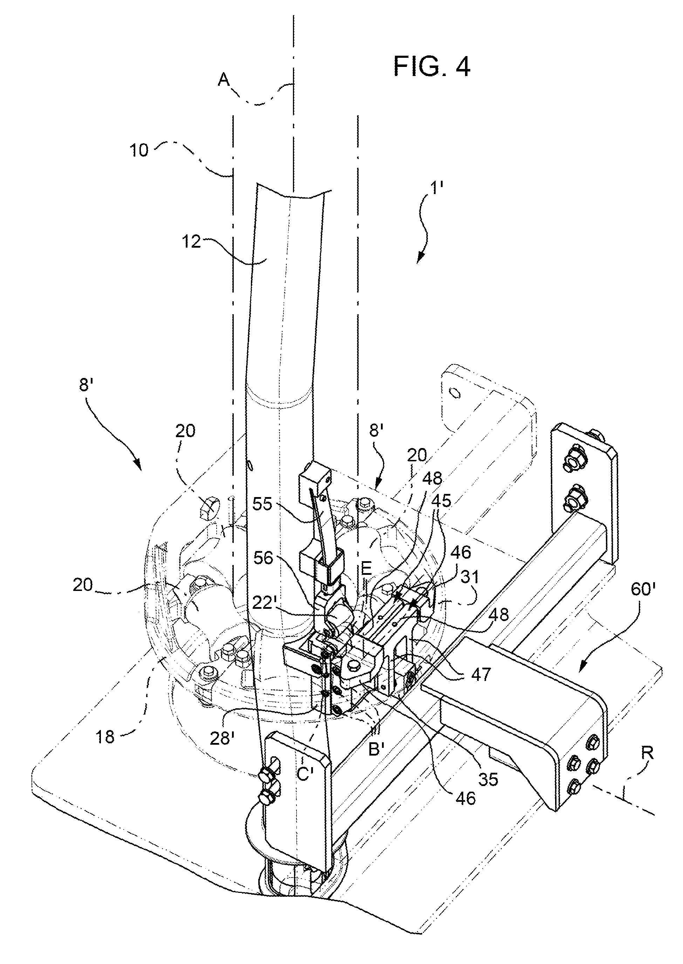

Levers 45 are hinged to respective plates 46, integral with frame 18, about respective axes E (Figure 4) parallel to each other and to axes B.

More specifically, axes E are parallel to axes B and C.

Bushes 51 are located below axes E.

Each lever 45 (Figure 4) comprises two parallel lateral columns 47 supporting respective pin 50; and a crosspiece 48 perpendicular to columns 47 and hinged to relative plates 46 about relative axis E.

In actual use, web 3 is unwound off reel 4 and fed along path P in the direction shown in Figure 1.

More specifically, web 3 is fed by guide members 5 along path P and through successive stations 6, 7, 8.

At station 6, edge 11 is heated, and portion 16 of strip 9 is applied to the face of edge 11 eventually facing inwards of packages 2. Once portion 16 of strip 9 is applied to edge 11, portion 17 projects from edge 11.

Next, web 3 interacts gradually with forming assemblies 13, and is folded to superimpose edges 11, 15 and form tube 10 not yet sealed longitudinally.

More specifically, forming assemblies 13 fold web 3 so that strip 9 is located inside the as yet unsealed tube 10, edge 15 is located radially outwards of edge 11 and portion 17 of strip 9 with respect to axis A, and edge 11 is located radially outwards of portion 16 of strip 9.

At station 8, edge 15 is heated to melt the polyethylene layer, and heat is transmitted by conduction from edge 15 to edge 11 and strip 9 to melt the polyethylene layer of edge 11 and the heat-seal material of strip 9.

Next, tube 10 is fed through the circular passage defined by rollers 22 on the axis A side, and by rollers 20, 21 on the opposite side to axis A. Edges 11, 15 and strip 9 are compressed between rollers 21, 22 to blend the polyethylene layer of edges 11, 15 and the heat-seal material of strip 9, and so form the molecular bonds defining seal 14 of the finished tube 10.

More specifically, seal 14 is formed by sealing to the inner face of edge 15 portion 17 of strip 9 and the face of edge 11 on the opposite side to portion 16.

When forming seal 14, leaf spring 55 pushes roller 22 elastically against edges 11, 15 and strip 9. The pressure exerted by rollers 22 on edges 11, 15 and strip 9 is directed substantially in direction R, and is transmitted to rollers 21 and through support 35, which is locked by pin 41 in direction R and connected to frame 18 by levers 45.

Supports 35 are secured in direction R by pin 41, and are sustained in a direction parallel to axis A by levers 45.

More specifically, levers 45 exert on supports 35 respective forces parallel to axis A and directed upwards with reference to Figure 3.

Load cell 31 is therefore traversed in direction R by a force equal to the pressure exerted by rollers 21, 22 on edges 11, 15 and strip 9, and generates a voltage signal associated with the force. The signal is generated continuously and can be acquired by the operator without stopping machine 1.

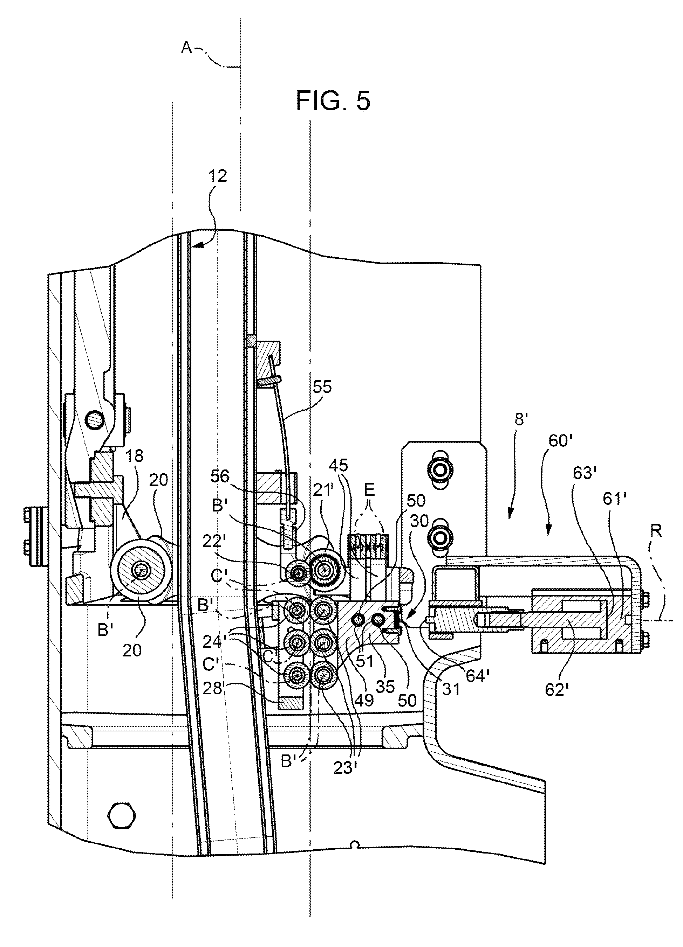

Number 1' in Figures 4 and 5 indicates a packaging machine in accordance with a different embodiment of the present invention.

Machine 1' being similar to machine 1, the following description is limited to the differences between the two, and using the same reference numbers, where possible, for identical or corresponding parts of machines 1 and 1'.

Station 8' of machine 1' differs from station 8 of machine 1 by roller 21' being hinged directly to frame 18 about respective axis B', and by comprising a number of further pressure rollers 24' and a number of further forming rollers 23' (Figure 5).

More specifically, rollers 24' and 23' are located inside and outside tube 10 respectively, and, in the example shown, machine 1' comprises three rollers 24' and three rollers 23'.

More specifically, rollers 24' are hinged to a member 28' about respective axes C', and rollers 23' are hinged to support 35 about respective axes B'. Member 28' is in turn hinged to device 12 about an axis parallel to axes B'.

More specifically, rollers 23', 24' are located downstream from corresponding rollers 21', 22' in the travelling direction of tube 10.

Axes B' and C' lie in respective vertical planes parallel to each other and to axis A.

Machine 1' also differs from machine 1 by having no lock means 40, and by comprising an actuator 60' which cooperates with load cell 31 to generate on support 35 a force in direction R and towards axis A.

More specifically, actuator 60' is a compressed-air actuator, is located on the opposite side of support 35 to axis A, and substantially comprises a cylinder 61', and a piston 62' sliding in direction R and elongated parallel to direction R.

More specifically, piston 62' comprises a first end 63' housed inside a chamber of cylinder 61', and a second end 64' opposite end 63', and is movable between a first operating position, in which end 64' cooperates with load cell 31 and exerts on support 35 a force directed towards axis A in direction R, and a second operating position (shown in Figure 5) in which end 64' is detached from load cell 31.

Operationwise, machine 1' differs from machine 1 by strip 9 and edges 11, 15 being pressed first between rollers 22', 21' and then between rollers 24', 23' when forming seal 14, and by end 64' of piston 62' exerting on load cell 31 a force directed towards axis A in direction R.

When forming seal 14, rollers 22', 21' ensure portion 17 of strip 9 and the face of edge 11 on the opposite side to portion 16 are superimposed correctly on the face of edge 15 inside tube 10, while rollers 24', 23' exert further pressure on edges 11, 15 and strip 9 as they cool.

The force exerted by piston 62' on load cell 31 travels through support 35 and is transmitted by roller 23' to strip 9 and edges 11, 15 of the packaging material.

The total pressure exerted by rollers 24', 23' on edges 11, 15 and strip 9 when forming seal 14 therefore equals the vector sum of the force exerted by rollers 24' on the packaging material, and the force exerted by actuator 60' on support 35 and, hence, roller 23'.

In this case too, levers 45 exert on support 35 respective forces parallel to axis A of tube 10.

Load cell 31 therefore detects, in this case too, a force substantially equal to the force exerted by rollers 24', 23' on the packaging material.

When forming seal 14, the force exerted by piston 62', in the first position, on load cell 31 secures support 35 in direction R and on the opposite side to axis A.

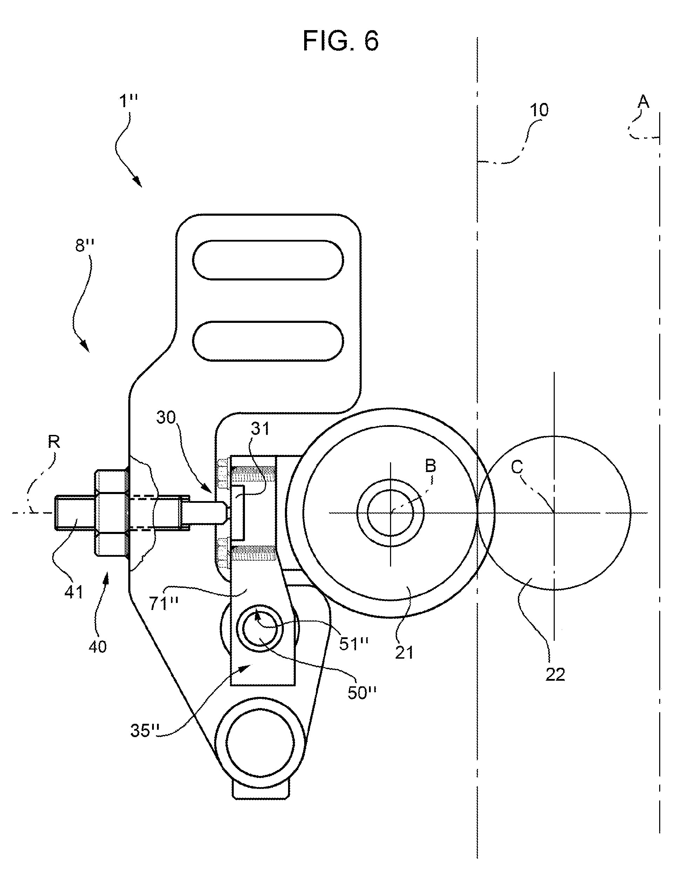

Number 8'' in Figure 6 indicates the sealing station of a packaging machine 1' ' in accordance with a third embodiment of the present invention.

Machine 1'' being similar to machine 1, the following description is limited to the differences between the two, and using the same reference numbers, where possible, for identical or corresponding parts of machines 1 and 1''.

Station 8'' differs from station 8 of packaging machine 1 by having no levers 45, and by support 35'' defining a bush 51'' engaged with minimum friction by a pin 50'' fixed to frame 18.

More specifically, support 35'' comprises, integrally, a main portion 71'' parallel to axis B and defining bush 51'', the axis of which is parallel to axis B.

Main portion 71'' supports in fixed manner load cell 31, and two parallel end portions (not shown in Figure 6) to which opposite axial ends of roller 21 are hinged about axis B.

Load cell 31 is located on a face of main portion 71'' on the opposite side to axis B, and is secured, in a direction parallel to direction R, by pin 41 which is elongated in direction R.

Pin 50'' cooperates with the edge of bush 51'', but is not fixed to bush 51''.

Pin 50'' therefore exerts on bush 51'', and hence on main portion 71", a force directed parallel to axis A, but exerts no force parallel to direction R.

Operation of machine 1'' is identical to that of machine 1 and therefore not described.

The advantages of machine 1, 1', 1'' according to the present invention will be clear from the above description.

In particular, the pressure exerted by rollers 21, 22, 23', 24' on the packaging material is measured by sensor means 30 automatically, continuously, accurately, reliably and repeatably, to ensure a high-quality seal 14.

Load cell 31 in fact supplies the pressure value continuously, with no manual measurement required of the operator, which would call for stopping machine 1, 1', 1''.

Being connected directly to rollers 21, 23', load cell 31 is traversed by a force, in direction R, corresponding to the actual pressure exerted by rollers 21, 22, 23', 24' on the packaging material when forming seal 14.

As a result, the measurement by load cell 31 is much more accurate than that of any other type of sensor not traversed directly by the pressure and connected elastically to one of rollers 21, 23', such as a dynamometer for determining the force exerted by leaf spring 55 upstream from roller 21, 23'.

Moreover, load cell 31 is capable of operating at the temperatures reached at station 8, 8', 8'' when forming seal 14, which means the above pressure can be real-time measured without stopping machine 1, 1', 1''. As a result, the pressure measurement by load cell 31 is much more accurate than any obtained by stopping machine 1, 1', 1'', e.g. by measuring the force exerted by leaf spring 55 upstream from roller 21, 23' when machine 1, 1', 1'' is stopped, and assuming the force remains constant when machine 1, 1', 1'' is running.

Machine 1' is particularly advantageous, by actuator 60' enabling adjustment of the pressure on strip 9 and edges 11, 15 of the packaging material when forming seal 14.

A predetermined optimum pressure can thus be maintained in the event of variations in operating parameters, such as the thickness of the packaging material.

Clearly, changes may be made to packaging machine 1, 1', 1'' as described herein without, however, departing from the scope of the present invention.

In particular, machine 1, 1'' may comprise one roller 21 and one roller 20, and machine 1' may comprise one roller 24' and one roller 23'.

Levers 45 may also be replaced by a guide elongated in direction R and exerting on support 35 a force directed parallel to axis A.

## Claims

1. A packaging machine (1; 1'; 1'') for producing sealed packages (2) of a food product from a web (3) of packaging material fed in the form of a tube (10) having a first axis (A), the machine comprising:
- a number of forming rollers (20, 21; 21', 23') defining a compulsory passage for said tube (10) and located, in use, outside the tube (10);
- a supporting frame (18) to which first forming rollers (20; 21') are hinged; and
- at least a first pressure roller (22; 24') which rotates about a second axis (C; C') crosswise to said first axis (A), is located, in use, inside said tube (10), and presses said packaging material against a corresponding second forming roller (21; 23') in a direction (R) crosswise to said first and said second axis (A; C, C'), to form a longitudinal seal (14) of the tube (10);
the machine being **characterized by** comprising sensor means (30, 31) connected rigidly in said direction (R) to one between said second forming roller (21; 23') or said first pressure roller (22; 24'), and which generate, in use, a signal associated with the pressure exerted on said packaging material when forming said seal (14).

2. A machine as claimed in Claim 1, **characterized in that** said sensor means (30, 31) are connected rigidly in said direction (R) to said second forming roller (21; 23'),

3. A machine as claimed in Claim 2, **characterized by** comprising a support (35; 35'') for supporting said sensor means (30, 31) and said second forming roller (21; 23'); said second forming roller (21; 23') being hinged to said support (35; 35'') about a third axis (B; B') crosswise to said first axis (A), and said sensor means (30, 31) being fixed to said support (35; 35'').

4. A machine as claimed in Claim 3, **characterized by** comprising first locking means (45) for securing said support (35; 35'') to said frame (18); said first locking means (45) exerting, in use, on said support (35; 35'') a force directed parallel to said first axis (A).

5. A machine as claimed in Claim 4, **characterized in that** said first locking means (45) comprise at least a pin (50; 50'') connected at least indirectly to said frame (18); and **in that** said support (35; 35'') comprises at least a bush (51; 51'') engaged by said pin (50; 50'') and exchanging, in use, with said pin (50; 50'') a force directed parallel to said first axis (A).

6. A machine as claimed in Claim 4 or 5, **characterized in that** said first locking means (45) comprise at least a first lever (45) supporting said pin (50) and connected to said frame (18).

7. A machine as claimed in Claim 6, **characterized in that** said first lever (45) is hinged to said frame (18) about a fourth axis (E) crosswise to said first axis (A) .

8. A machine as claimed in Claim 6 or 7, **characterized in that** said first lever (45) comprises two first portions (47) parallel to each other and supporting said support (35) parallel to said first axis (A); and a second portion (48) crosswise to said first portions (47) and hinged to said frame (18) about said fourth axis (E).

9. A machine as claimed in any one of the foregoing Claims, **characterized by** comprising second locking means (40) for securing said support (35; 35'') to said frame (18); said second locking means (40) preventing movement of said support (35; 35'') in said direction (R).

10. A machine as claimed in Claim 9, **characterized in that** said second locking means (40) comprise a member (41) cooperating with said sensor means (30, 31).

11. A machine as claimed in Claim 9 or 10, **characterized in that** said sensor means (30, 31) and said second forming roller (21; 23') are located at opposite ends of said support (35; 35''); said second locking means (40) being located on the opposite side of said sensor means (30, 31) to said second forming roller (21; 23').

12. A machine as claimed in any one of the foregoing Claims, **characterized in that** said first pressure roller (22) is pushed elastically against said second forming roller (21).

13. A machine as claimed in any one of Claims 2 to 8, **characterized by** comprising actuating means (60') which exert on said support (35; 35'') a force having at least a component in said direction (R), so that said pressure exerted on said packaging material when forming said longitudinal seal (14) is adjustable.

14. A machine as claimed in Claim 13, **characterized by** comprising a fill device (12) for filling said tube (10) with said food product; and in that said first pressure roller (24') is hinged to a member (28') in turn hinged to said fill device (12) for filling said tube (10).

15. A machine as claimed in Claim 14, **characterized by** comprising a second pressure roller (22') parallel to one of said first forming rollers (21'); said second pressure roller (22') and said one of said first forming rollers (21') being located upstream from said first pressure roller (24') and said second forming roller (23') respectively, with reference to the travelling direction of said tube (10); said second pressure roller (22') being pushed elastically against said one of the first forming rollers (21').

16. A machine as claimed in any one of Claims 12 to 15, **characterized in that** said actuating means (60') can be set to an operating position preventing movement of said support (35; 35'') in said direction (R).

17. A machine as claimed in any one of the foregoing Claims, **characterized in that** said sensor means (30) comprise a load cell (31).

18. A packaging machine (1') for producing sealed packages (2) of a food product from a web (3) of packaging material fed in the form of a tube (10) having a first axis (A), the machine comprising:
- at least a first forming roller (23') located, in use, outside said tube (10); and
- at least a first pressure roller (24') located, in use, inside said tube (10), and which presses said packaging material against said first forming roller (23') to form a longitudinal seal (14) of the tube (10);
the machine being **characterized by** comprising actuating means (60') which exert on said first pressure roller (24') or said first forming roller (23') a force having at least a component in a direction (R) radial with respect to said first axis (A), so that the pressure exerted on said packaging material when forming said longitudinal seal (14) is adjustable.

19. A machine as claimed in Claim 18, **characterized by** comprising a second pressure roller (22') and a second forming roller (21') located upstream from said first pressure roller (24') and said first forming roller (23') respectively in the travelling direction of said tube (10); said second pressure roller (22') pressing said packaging material against said second forming roller (21') in said direction (R), and being pushed elastically against the second forming roller (21'); said machine (1') comprising a supporting frame (18), to which said second forming roller (21') is hinged.
